# EUROPÄISCHE PATENTANMELDUNG

(11) **EP 4 008 681 A1**
(43) Veröffentlichungstag der Anmeldung: **08.06.2022**
(21) Anmeldenummer: 21211993.7
(22) Anmeldetag: 02.12.2021
(51) Int. Cl.: B67C 3/22, F15D 1/00

(54) **PRODUKTTANK UND VORRICHTUNG ZUM BEFÜLLEN EINES BEHÄLTERS MIT EINEM FÜLLPRODUKT**

(30) Priorität: 02.12.2020 DE 102020132070
(71) Anmelder: KRONES AG, 93073 Neutraubling (DE)
(72) Erfinder: Ehrismann, Tobias, 93073 Neutraubling (DE); Laumer, Christina, 93073 Neutraubling (DE); Grauham, Michael, 93073 Neutraubling (DE); Richter, Volker, 93073 Neutraubling (DE)
(74) Vertreter: Nordmeyer, Philipp Werner

(57) **Zusammenfassung**

Produkttank (10) zur Aufnahme eines flüssigen Produkts und Vorrichtung (1) zum Befüllen von Behältern (100) mit einem Füllprodukt, vorzugsweise in einer Getränkeabfüllanlage, wobei der Produkttank (10) aufweist: einen Auslauf (11) zum Ausleiten des Produkts aus dem Produkttank (10) entlang einer Ausleitrichtung; und eine Strömungsleiteinrichtung (12), die im Innern des Produkttanks (10) angeordnet und dazu eingerichtet ist, eine zur Ausleitrichtung orientierte Querströmung zu erzeugen.

## Beschreibung

### Technisches Gebiet

Die vorliegende Erfindung betrifft einen Produkttank zur Aufnahme eines flüssigen Produkts sowie eine Vorrichtung zum Befüllen von Behältern mit einem Füllprodukt, beides vorzugsweise in einer Getränkeabfüllanlage.

### Stand der Technik

In Getränkeabfüllanlagen werden Produkttanks zur Aufnahme und Zwischenlagerung des abzufüllenden Produkts oder Komponenten desselben an mehreren Stellen eingesetzt. So ist beispielsweise bekannt, das abzufüllende Produkt in einem Mischer anzumischen, wobei hierbei üblicherweise ein Grundstoff und/oder Sirup in einen vorher aufbereiteten und bevorzugt entgasten Produktwasserstrom eingemischt wird. Das so hergestellte Füllprodukt wird in einem als "Puffertank" bezeichneten Produkttank aufgenommen und zunächst zwischengespeichert, bevor es in einem Füller abgefüllt wird. Der Füller kann ebenfalls einen Produkttank aufweisen, beispielsweise in Form eines Zentralkessels oder einer Ringleitung, zur Versorgung mehrerer Füllventile, über die das Füllprodukt schließlich in die abzufüllenden Behälter eingeleitet wird.

Alternativ kann das Füllprodukt vom Puffertank ohne einen weiteren zwischengeschalteten Produkttank den Füllventilen zugeleitet werden. Eine Vorrichtung dieser Art geht aus der WO 2019/043240 A1 hervor.

Die vorstehend genannten Produkttanks weisen zumindest einen Auslauf zur Abgabe des Füllprodukts an die nächste Verarbeitungsstation auf. Der Auslauf kann nach unten gerichtet sein oder seitlich, insbesondere seitlich-tangential, verlaufen. In beiden Fällen kann am Auslauf in Abhängigkeit von Prozess- und Umgebungsbedingungen (Durchfluss, Geometrie, Füllstand, Viskosität usw.) durch Auftreten von Zentrifugalkräften eine Trombe entstehen. Als "Trombe" wird ein sich drehender Strudel mit einer geraden oder geschwungenen Rotationsachse bezeichnet, der am Auslauf entstehen kann, etwa aufgrund der Erdrotation, Bewegung des Mediums, Kräfte der Wandreibung oder aus anderen Gründen. Durch die Impulserhaltung steigt die Winkelgeschwindigkeit, wenn sich Teilchen der Rotationsachse nähern. Die Trombe wird beschleunigt.

Eine solche Trombenbildung ist bei der Abfüllung flüssiger Füllprodukte, insbesondere bei der Abfüllung von Getränken, nachteilig, da durch die Trombe Gasblasen aus dem Kopfraum des Produkttanks in das Füllprodukt eingetragen werden. Diese wiederum können die Qualität des Füllprodukts beeinträchtigen und zudem dazu führen, dass die mittels Durchflussmessern in den Füllventilen gemessenen Durchflüsse nicht korrekt sind. Außerdem kann das Füllprodukt in den Behältern überschäumen.

Tromben können sich sowohl bei nach unten gerichteten Ausläufen als auch bei seitlichen Ausläufen bilden. Eine Methode zur Verminderung der Trombenbildung besteht darin, das Füllniveau im Tank deutlich zu erhöhen, was im Fall der Getränkeabfüllanlagen jedoch prozessbedingt oft nicht erwünscht und bei der Restmengenabfüllung, d.h. beim Leerfahren des Produkttanks, nicht realisierbar ist.

### Darstellung der Erfindung

Eine Aufgabe der Erfindung besteht darin, einen verbesserten Produkttank zur Aufnahme eines flüssigen Produkts sowie eine verbesserte Vorrichtung zum Befüllen von Behältern mit einem Füllprodukt bereitzustellen, insbesondere einen etwaigen Gaseintrag in das Produkt beziehungsweise Füllprodukt zu vermindern.

Die Aufgabe wird durch einen Produkttank mit den Merkmalen des Anspruchs 1 sowie eine Vorrichtung mit den Merkmalen des Anspruchs 12 gelöst. Vorteilhafte Weiterbildungen folgen aus den Unteransprüchen, der folgenden Darstellung der Erfindung sowie der Beschreibung bevorzugter Ausführungsbeispiele.

Der Produkttank dient der Aufnahme und etwaigen Zwischenlagerung eines flüssigen Produkts, insbesondere eines abzufüllenden Füllprodukts, vorzugsweise in einer Getränkeabfüllanlage. Als Produkt beziehungsweise Füllprodukt kommen insbesondere Getränke in Betracht, wie beispielsweise Wasser (still oder karbonisiert), Softdrinks, Smoothies, Milchprodukte, Bier, Wein, Mischgetränke und dergleichen. Hierbei ist der Produkttank in der Regel nicht vollständig gefüllt, sondern oberhalb des Füllniveaus liegt ein Kopfraum vor, der ein Gas, beispielsweise Luft oder CO₂, aufweist.

Der Produkttank gemäß der Erfindung weist einen Auslauf zum Ausleiten des Produkts aus dem Produkttank entlang einer Ausleitrichtung und eine Strömungsleiteinrichtung auf, die im Innern des Produkttanks angeordnet und dazu eingerichtet ist, eine zur Ausleitrichtung quer orientierte Querströmung zu erzeugen.

Indem die Strömungsleiteinrichtung eine zur Ausleitrichtung gerichtete Querströmung erzeugt, werden etwaige sich am Auslass bildende Tromben vom Auslass "weggespült" und aufgelöst. Eine Trombe bildet sich bevorzugt auf dem kürzesten Weg zwischen Auslass und Flüssigkeitsniveau beziehungsweise -oberfläche. Durch die größer werdende Entfernung zwischen Auslass und beginnender Trombe unter Wirkung einer Querströmung zerfällt diese wieder, bevor Gas aus dem Kopfraum des Produkttanks gesogen werden kann. Auf diese Weise kann ein etwaiger Gaseintrag in das Produkt vermindert werden.

Der Auslauf kann nach unten gerichtet sein oder seitlich, insbesondere seitlich-tangential, verlaufen. Üblicherweise ist der Auslauf im unteren Bereich des Produkttanks angeordnet.

Es sei darauf hingewiesen, dass die hierin verwendeten räumlichen Bezeichnungen wie etwa "waagerecht", "senkrecht", "seitlich", "oben", "unten" "oberhalb", "unterhalb" und dergleichen durch die bestimmungsgemäße Einbaulage des Produkttanks klar und eindeutig definiert sind.

Vorzugsweise umfasst die Strömungsleiteinrichtung mindestens ein Leitblech im Bereich des Auslasses, das einen Teil des Produkttankquerschnitts abdeckt. Das Leitblech bildet ein maschinenbaulich einfaches und zuverlässiges Mittel zur Erzeugung der Querströmung, da eine sich bildende Trombe zu einer Rotation der Flüssigkeit führt, die am Leitblech umgelenkt wird.

Ist das Leitblech in Abhängigkeit der Prozessbedingungen (Beschaffenheit des Produkts, Geometrie des Produkttanks, Lage und Form des Auslasses usw.) optimal positioniert und ausgerichtet, kann eine Trombenentstehung und somit das Ausströmen von Gas unabhängig von der Leistungsabnahme nahezu vollständig verhindert werden.

Zu diesem Zweck ist das zumindest eine Leitblech vorzugsweise fest und/oder bündig an einer Innenwand des Produkttanks befestigt. Besonders bevorzugt sind das zumindest eine Leitblech und die Innenwand des Produkttanks miteinander verschweißt. Auf diese Weise ist die Verbindung zwischen Produkttank und Leitblech besonders hygienisch. Dies gilt gleichermaßen für weitere oder alle Leitbleche, sofern vorhanden.

Gemäß einem alternativen Ausführungsbeispiel ist vorzugsweise ein Befestigungsrahmen im Innern des Produkttanks vorgesehen, an dem das Leitblech befestigt ist, beziehungsweise befestigt werden kann. Der Befestigungsrahmen kann lösbar und justierbar im Produkttank montiert sein, um die Position und Lage des Leitbleches nachjustieren und an geänderte Prozessbedingungen anpassen zu können. Alternativ oder zusätzlich ist das Leitblech vorzugsweise lösbar am Befestigungsrahmen montiert, beispielsweise verschraubt. Auf diese Weise kann ein oder können mehrere Leitbleche im Bedarfsfall schnell und unkompliziert nachgerüstet werden. Ferner lässt sich so die optimale Position und Ausrichtung des Leitblechs bzw. der Leitbleche ermitteln, ohne den Produkttank zu beschädigen.

Vorzugsweise weist der Befestigungsrahmen einen oder mehrere Arme auf, die sich an einer Innenwand des Produkttanks abstützen. Der Befestigungsrahmen kann beispielsweise vier zu einem Kreuz angeordnete Arme aufweist, wodurch er sich an verschiedenen Seiten beziehungsweise Stellen der Innenwand des Produkttanks abstützen kann. Vorzugsweise stützt sich der Befestigungsrahmen allein durch Druck gegen die Innenwand des Produkttanks ab, er ist sozusagen im Produkttank eingespannt. Auf diese Weise kann das Leitblech ohne Bohrungen, Befestigungshaken, Flansche, Nasen oder andere Befestigungsmittel, welche die Struktur des Produkttanks beeinträchtigen könnten, schnell und einfach im Produkttank positioniert und befestigt werden.

Vorzugsweise weist der Produkttank einen zylindrischen Innenraum auf, der eine Axialrichtung definiert. Das Leitblech ist vorzugsweise im unteren Bereich des Produkttanks angeordnet und in der Axialrichtung des Produkttanks vom Auslauf beabstandet. Auf diese Weise wirkt das Leitblech im Fall einer Trombenbildung auf den nach außen treibenden, rotierenden Fluidstrom und lenkt diesen um. Vorzugsweise deckt das Leitblech zu diesem Zweck etwa ein Viertel des Produkttankquerschnitts ab. Das Leitblech kann dazu die Form eines Kreissegments, insbesondere eines Viertel-Kreissegments haben und im Fall des oben genannten vierarmigen Befestigungsrahmens an zwei Armen montiert sein.

Vorzugsweise ist das zumindest eine Leitblech bogenförmig geformt und so montiert, dass es zumindest abschnittsweise an der Innenwand des Produkttanks verläuft und senkrecht zur Axialrichtung in den Innenraum des Produkttanks vorsteht. Das bogenförmige Leitblech ist hierbei vorzugsweise in Axialrichtung an der Position des Auslaufs angeordnet. Es kann beobachtet werden, dass eine Trombe nicht konstant an einem Ort verbleibt, sondern sich an verschiedene Positionen bewegt, jedoch immer vom Auslauf nach oben Richtung Kopfraum des Produkttanks strebt. An einem Leitblech auf axialer Höhe des Auslaufs wird die rotierende Flüssigkeit umgelenkt, es entsteht eine Querströmung, die Trombe bleibt "hängen" und wird dadurch zerstört.

Vorzugsweise sind zwei bogenförmige Leitbleche vorgesehen, die so geformt und montiert sind, dass sie an der gleichen axialen Position an der Innenwand des Produkttanks verlaufen und senkrecht zur Axialrichtung in den Innenraum des Produkttanks vorstehen, wobei sie so in Axialrichtung an der Position des Auslaufs angeordnet sind, dass sie den Auslauf aussparen. In anderen Worten, um den Einbau der Leitbleche an die Geometrie des Auslaufs anzupassen, sind gemäß dieser Ausführungsvariante links und rechts des Auslaufs senkrecht zur Innenwand stehende, vom Auslauf entlang der Innenwand bogenförmig nach oben laufende Leitbleche angebracht. Auf diese Weise lässt sich auf maschinenbaulich einfache Weise ein zuverlässiger Trombenschutz realisieren.

Vorzugsweise ist ein Auslaufdeckel vorgesehen, der im Produkttank in Ausleitrichtung in einem Abstand vom Auslauf angeordnet ist und diesen abdeckt. Die Tellerebene des Auslaufdeckels steht senkrecht auf der Ausleitrichtung. Im Fall eines senkrecht nach unten gerichteten Auslaufs ist der Auslaufdeckel somit oberhalb des Auslaufs positioniert. Der Auslaufdeckel fungiert als eine weitere Einrichtung zur Reduzierung der Trombenbildung. Vorzugsweise ist der Durchmesser des Auslaufdeckels größer als der des Auslaufs, wodurch der Auslaufdeckel den Auslauf in radialer Richtung überlappt.

Vorzugsweise umfasst die Strömungsleiteinrichtung mehrere, beispielsweise genau vier, Paddel, die am Auslassteller montiert beziehungsweise installiert sind, wobei die Paddel radial über den Auslaufteller hinausstehen. Dadurch, dass die Paddel radial über den Auslaufteller hinausstehen, wird die rotierende Flüssigkeit einer sich bildenden Trombe an ihnen umgelenkt, es entsteht eine Querströmung zur Trombe, wodurch die Trombe zerstört wird. Die Paddel können über eine Paddelbefestigung direkt am Auslaufteller montiert werden, wodurch sie problemlos und sicher installierbar sind.

Vorzugsweise umfasst die Strömungsleiteinrichtung ein Abzweigrohr, das eine Öffnung im Bereich des Auslasses aufweist und eingerichtet ist, um einen Teilstrom des über den Auslass auszuleitenden Produkts abzuzweigen, wobei der abgezweigte Teilstrom vorzugsweise im Wesentlichen senkrecht auf der Ausleitrichtung steht. Indem der über das Abzweigrohr abgezweigte Teilstrom senkrecht zur Auslaufströmung fließt oder zumindest eine dazu senkrechte Vektorkomponente aufweist, entsteht eine Querströmung, welche die Trombe bereits bei der Entstehung "mitreißt" und verhindert, dass diese sich ausbilden und stabilisieren kann.

Vorzugsweise verläuft das Abzweigrohr ausgehend von der Öffnung im Bereich des Auslasses in der Axialrichtung des Produkttanks. Das Abzweigrohr kann anschließend in Teilstromrichtung aus dem Produkttank herausgeführt werden, beispielsweise über eine 90°-Umlenkung, wobei das Abzweigrohr in diesem Fall außerhalb des Produkttanks eingerichtet ist, um den abgezweigten Teilstrom an anderer Stelle dem Produkttank wieder zuzuführen. Der Teilstrom kann mittels eines Unterdrucks oder einer Pumpe abgezweigt werden. Auf diese Weise wird die Querströmung aktiv erzeugt, wobei die Querströmung durch die Stärke des Teilstroms, Volumenstrom oder dergleichen sogar während des regulären Betriebs, beispielsweise in Abhängigkeit der Füllhöhe im Produkttank, reguliert werden kann, um stets eine optimale Trombenvermeidung zu gewährleisten.

Die oben genannte Aufgabe wird ferner durch eine Vorrichtung zum Befüllen von Behältern mit einem Füllprodukt gelöst, wobei die Vorrichtung einen Produkttank gemäß einer der vorstehend dargelegten Ausführungsvarianten aufweist.

Die Merkmale, technischen Wirkungen, Vorteile sowie Ausführungsbeispiele, die in Bezug auf den Produkttank beschrieben wurden, gelten analog für die Vorrichtung.

Der Produkttank kann beispielsweise als Kessel oder Ringleitung eines Füllers zur Versorgung von Füllventilen realisiert sein.

Besonders bevorzugt weist die Vorrichtung einen Mischer zum Anmischen des Füllprodukts aus wenigstens zwei Komponenten und ein oder mehrere Füllventile zum Befüllen der Behälter mit dem Füllprodukt auf, wobei der Produkttank zur puffernden Aufnahme des im Mischer angemischten Füllprodukts eingerichtet ist. Der Produkttank sei in diesem Fall auch als "Puffertank" bezeichnet. Er ist durch die integrierte Strömungsleiteinrichtung in der Lage, das Füllprodukt ohne qualitative Beeinträchtigung an den Füller beziehungsweise die Füllventile zu leiten.

Vorzugsweise ist das Füllventil beziehungsweise sind die mehreren Füllventile pufferfrei mit dem Puffertank verbunden.

Dadurch, dass das Füllventil pufferfrei mit dem Puffertank verbunden ist, kann auf einen Zwischenpuffer und insbesondere einen Füllerkessel zwischen dem Füllventil und dem Puffertank verzichtet werden, so dass ein effizienterer Aufbau resultiert. Mit anderen Worten kann in der Vorrichtung auf zumindest einen Puffertank, der in herkömmlichen Füllproduktabfüllanlagen vorgesehen ist, verzichtet werden. Hieraus ergibt sich eine Verbesserung des Aufbaus unter anderem darin, dass das insgesamt zwischengepufferte Füllproduktvolumen reduziert werden kann, was eine verbesserte Effizienz der Vorrichtung zur Folge hat, da am Füllende oder bei einem Produktwechsel weniger oder überhaupt kein Füllprodukt verworfen werden muss.

Weiterhin lässt sich die Vorrichtung einfacher steuern oder regeln, da zwischen dem Mischer und dem Füllventil eine Koordination beziehungsweise eine Überwachung von Füllhöhen mehrerer Puffer, die miteinander wechselwirken, vermieden werden kann.

Da der Transport des Füllprodukts vom Puffertank an das Füllventil bevorzugt pufferfrei erfolgt, ist ein Puffertankt in der Ausführung eines Produkttanks mit Strömungsleiteinrichtung besonders nützlich, da andernfalls etwaiges in das Füllprodukt eingebrachtes Gas unmittelbar an das Füllventil gelangen könnte.

Unter pufferfrei wird hier verstanden, dass keine dedizierte Puffervorrichtung vorliegt, die das puffernde Aufnehmen von Füllprodukt, beispielsweise während Produktionspausen oder bei Störungen der Füllvorrichtung, ermöglicht. Als Puffervorrichtung werden insbesondere nicht die vorliegenden Rohrleitungen verstanden, durch welche hindurch das Füllprodukt fließt und welche während des Füllbetriebs entweder über ihren gesamten Querschnitt hinweg oder zumindest über einen Teil ihres Querschnitts hinweg mit dem Füllprodukt befüllt sind. Auch eine Ringleitung in einem Füllerkarussell, welche die jeweiligen Füllventile mit Füllprodukt versorgt, ist kein Puffer gemäß dem vorliegenden Verständnis.

Unter einer Puffervorrichtung wird vielmehr nur ein dediziert als solches vorgesehenes Pufferreservoir verstanden, das ein entsprechendes Puffervolumen bereitstellt. Damit kann die Puffervorrichtung eine substanzielle Menge an zusätzlichem Füllprodukt aufnehmen, welches in Produktionspausen oder bei Anlagenstörungen anfällt und nicht direkt von der Füllvorrichtung abgenommen wird.

Alternativ oder zusätzlich kann der Mischer pufferfrei mit dem Puffertank verbunden sein. Zwischen dem Mischer und dem Füllventil befindet sich vorzugsweise nur ein einziger Puffertank, in dem sowohl ein Zwischenspeichern des im Mischer hergestellten Füllprodukts als auch ein Vorhalten des im Mischer hergestellten Füllprodukts zur Bereitstellung am Füllventil vorgesehen ist. Damit kann das insgesamt vorzuhaltende Puffervolumen reduziert werden, und Abhängigkeiten zwischen unterschiedlichen Puffertanks, beispielsweise bezüglich deren Füllhöhen, können vermieden werden. Entsprechend kann nicht nur die Effizienz der Vorrichtung erhöht werden, sondern es können auch definierte Bedingungen für das Füllventil bereitgestellt werden.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Figuren.

### Kurze Beschreibung der Figuren

Bevorzugte weitere Ausführungsformen der Erfindung werden durch die nachfolgende Beschreibung der Figuren näher erläutert. Dabei zeigen:
- Figur 1: einen Produkttank mit einer Strömungsleiteinrichtung zur Verminderung der Trombenbildung gemäß einem Ausführungsbeispiel;
- Figur 2: einen Produkttank mit einer Strömungsleiteinrichtung zur Verminderung der Trombenbildung gemäß einem weiteren Ausführungsbeispiel;
- Figur 3: einen Produkttank mit einer Strömungsleiteinrichtung zur Verminderung der Trombenbildung gemäß einem weiteren Ausführungsbeispiel;
- Figur 4a: einen Produkttank mit einer Strömungsleiteinrichtung zur Verminderung der Trombenbildung gemäß einem weiteren Ausführungsbeispiel;
- Figur 4b: den Produkttank mit Strömungsleiteinrichtung zur Verminderung der Trombenbildung gemäß der Figur 4a aus einer anderen Perspektive; und
- Figur 5: eine schematische Darstellung einer Vorrichtung zum Befüllen von Behältern gemäß einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanz zu vermeiden.

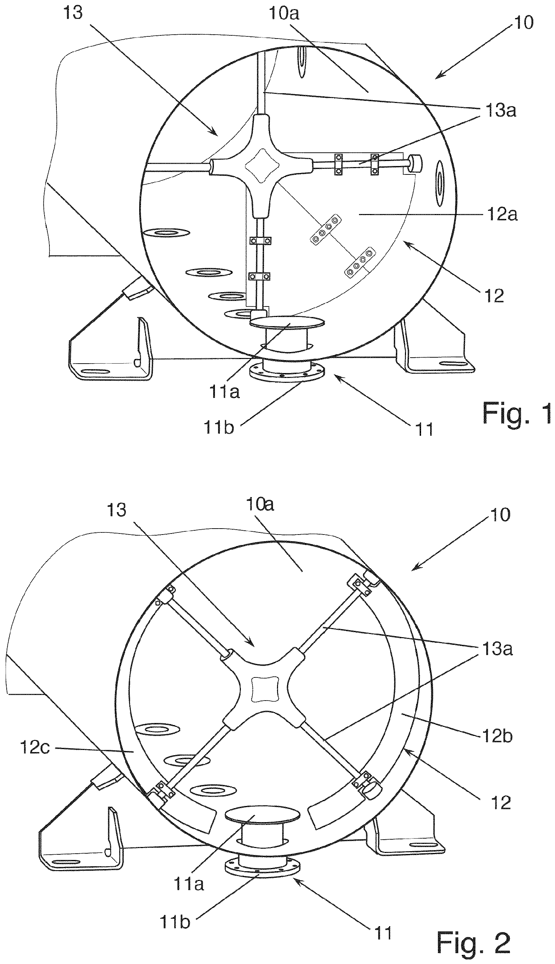

Die Figuren 1, 2, 3, 4a und 4b zeigen unterschiedliche Ausführungsbeispiele eines Produkttanks 10. Der Produkttank 10 hat hier beispielhaft eine zylindrische Form, er kann jedoch auch anders gestaltet sein, soweit er zur Aufnahme und Zwischenlagerung eines flüssigen Produkts, insbesondere eines abzufüllenden Füllprodukts, geeignet ist. Als Produkt kommen insbesondere Getränke in Betracht, wie beispielsweise Wasser (still oder karbonisiert), Softdrinks, Smoothies, Milchprodukte, Bier, Wein, Mischgetränke und dergleichen. Hierbei ist der Produkttank 10 in der Regel nicht vollständig gefüllt, sondern oberhalb des Füllniveaus liegt ein Kopfraum vor, der ein Gas, beispielsweise Luft oder CO₂, aufweist.

Der Produkttank 10 weist einen Auslauf 11 auf, der hier beispielhaft nach unten, d.h. in Schwerkraftrichtung, gerichtet ist. Der Auslauf 11 kann jedoch auch zur Seite, d.h. im unteren Bereich des Produkttanks 10 im Wesentlichen waagerecht und gegebenenfalls tangential zum Produkttank 10 verlaufen. Der Auslauf 11 definiert eine Ausleitrichtung, die im Fall eines nach unten gerichteten Auslaufs 11 der Schwerkraftrichtung entspricht.

Der Auslauf 11 ist mit einem Auslaufdeckel 11a ausgestattet, der oberhalb des Auslaufs 11 beziehungsweise dessen Öffnung und senkrecht zur Ausleitrichtung, die im vorliegenden Fall mit der Schwerkraftrichtung übereinstimmt, angeordnet ist. Der Auslaufdeckel 11a fungiert als eine erste Einrichtung zur Reduzierung der Trombenbildung, er kann sie jedoch nicht unbedingt vollständig verhindern.

Der Auslauf 11 weist ferner einen Auslaufanschluss 11b auf, an den eine Leitung zum Abtransport des Produkts anschließbar ist.

Der Produkttank 10 umfasst ferner eine Strömungsleiteinrichtung 12, die eingerichtet ist, um eine oder mehrere Querströmungen zu erzeugen, um eine sich bildende Trombe vom Auslass 11 wegzuspülen und dadurch bereits bei der Entstehung aufzulösen.

Im Ausführungsbeispiel der Figur 1 umfasst die Strömungsleiteinrichtung 12 ein Leitblech 12a, das seitlich des Auslaufs 11 angeordnet und eingerichtet ist, um die oben genannte Querströmung zu erzeugen. Zu diesem Zweck kann das Leitblech 12a einen Teil des Tankquerschnitts in waagerechter Richtung abdecken, vorzugsweise etwa ein Viertel des Tankquerschnitts. Das Leitblech 12a hat hier die Form eines Kreissegments, das außen am Kreisbogen an der Innenwand 10a des Produkttanks 10 abschließt und sich von dort nach innen erstreckt.

Eine Trombe bildet sich bevorzugt auf dem kürzesten Weg zwischen Auslass 11 und Flüssigkeitsniveau beziehungsweise -oberfläche. Durch die größer werdende Entfernung zwischen Auslass 11 und beginnender Trombe zerfällt diese wieder, bevor Gas aus dem Kopfraum des Produkttanks 10 gesogen werden kann.

Ist das Leitblech 12a an der richtigen Stelle im Produkttank 10 positioniert, kann eine Trombenentstehung und somit das Ausströmen von Gas unabhängig von der Leistungsabnahme nahezu vollständig verhindert werden.

Vorzugsweise ist das Leitblech 12a an der Tankinnenwand 10a fest verschweißt. Um das Leitblech 12a jedoch schnell und einfach positionieren und befestigen zu können, kann ein Befestigungsrahmen 13 vorgesehen sein, an dem das Leitblech 12a befestigt, beispielsweise über Schellen angeschraubt wird. Der Befestigungsrahmen 13 stützt sich über mehrere, vorzugsweise vier, Arme 13a an der Innenwand 10a des Produkttanks 10 ab. Auf diese Weise kann das Leitblech 12a ohne Bohrungen, Befestigungshaken, Flansche, Nasen oder andere Befestigungsmittel, welche die Struktur des Produkttanks 10 beeinträchtigen könnten, schnell und einfach positioniert und montiert werden.

Das hier beschriebene Leitblech 12a ist ein effizientes Mittel zur Vermeidung von Tromben auch im Fall eines seitlichen oder seitlich-tangentialen Auslaufs 11.

Ein abgewandeltes Ausführungsbeispiel, das ebenfalls auf der Anwendung von Leitblechen basiert, geht aus der Figur 2 hervor.

Hierbei sind zwei bogenförmige Leitbleche 12b, 12c so geformt und am Befestigungsrahmen 13 montiert, dass sie an der Innenwand 10a des Produkttanks 10 verlaufen und sich um einen bestimmten Weg nach innen erstrecken. Um den Einbau der Leitbleche 12b, 12c an die Geometrie des senkrechten mittigen Auslaufs 11 anzupassen, sind links und rechts des Auslaufs 11 die senkrecht zur Innenwand 10a stehenden, vom Auslauf 11 entlang der Innenwand 10a nach oben laufenden Leitbleche 12b, 12c angebracht. In anderen Worten, die Leitbleche 12b, 12c befinden sich an der Position des Auslaufs 11, in axialer Richtung des zylindrischen Produkttanks 10 gesehen. Der Auslauf 11 sowie gegebenenfalls ein oberer Abschnitt des Produkttanks 10 werden von den Leitblechen 12b, 12c ausgespart.

Es kann beobachtet werden, dass eine Trombe nicht konstant an einem Ort verbleibt, sondern sich an verschiedene Positionen bewegt, jedoch immer aus dem Auslauf 11 beziehungsweise dem Spalt zwischen dem Auslaufteller 11a und der Auslauföffnung heraustritt und nach oben Richtung Kopfraum des Produkttanks 10 strebt. An den Leitblechen 12b, 12c wird die rotierende Flüssigkeit umgelenkt, es entsteht eine Querströmung, die Trombe bleibt "hängen" und wird dadurch zerstört.

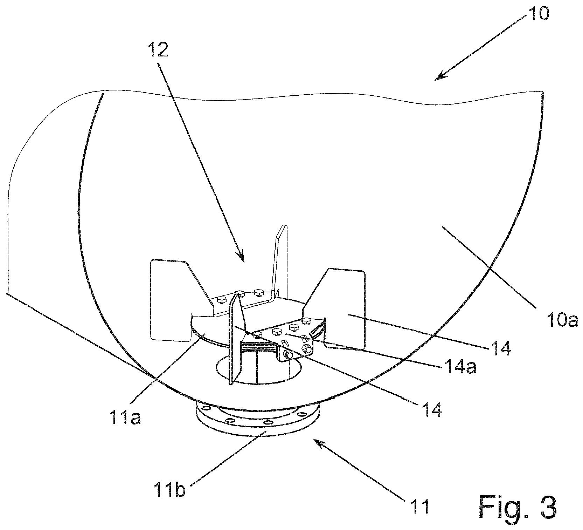

Das Ausführungsbeispiel der Figur 3 beruht auf einem ähnlichen Prinzip, wobei statt der Leitbleche 12b, 12c auf Höhe des Auslaufs 11 mehrere, vorzugsweise vier, Paddel 14 am Auslassteller 11a montiert sind. Die Paddel 14 stehen radial über den Auslaufteller 11a hinaus, so dass die rotierende Flüssigkeit einer etwaigen sich bildenden Trombe an ihnen umgelenkt wird, es entsteht eine Querströmung zur Trombe, wodurch die Trombe zerstört wird. Die Paddel 14 werden über eine Paddelbefestigung 14a direkt am Auslaufteller 11a befestigt, wodurch sie problemlos und sicher installierbar sind. Die Paddelbefestigung 14a und das oder die Paddel 14 können einstückig oder teilweise einstückig ausgebildet sein, wie im Beispiel der Figur 3.

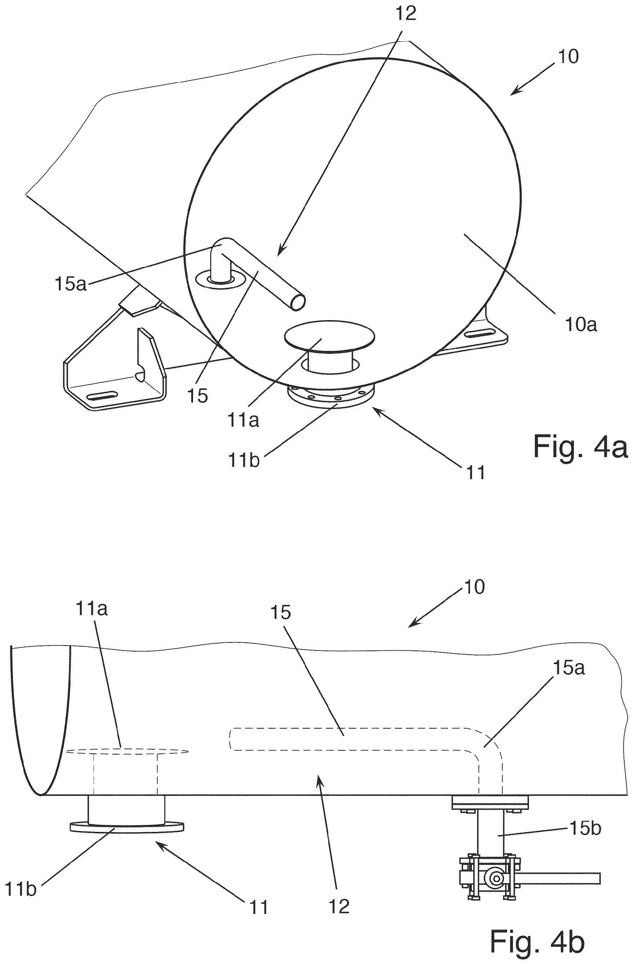

Die Figuren 4a und 4b zeigen ein weiteres Ausführungsbeispiel, bei dem die Querströmung relativ zu einer entstehenden Trombe aktiv dadurch erzeugt wird, dass ein Teilstrom über ein Abzweigrohr 15 abgezweigt wird. Das Abzweigrohr 15 weist eine Öffnung im Bereich des Auslasses 11 beziehungsweise seitlich davon auf und verläuft im Wesentlichen senkrecht oder zumindest mit einer senkrechten Vektorkomponente zur Ausleitrichtung, d.h. zur Rotationsachse einer etwaigen Trombe. Im vorliegenden Beispiel verläuft das Abzweigrohr 15 in Axialrichtung eine Strecke parallel zur Innenwand 10a des Produkttanks 10, wird dann an einer Umlenkung 15a zur Innenwand 10a hin umgelenkt, verlässt den Produkttank 10, um anschließend über einen externen Rohrabschnitt 15b (vgl. Figur 4b) außerhalb des Produkttanks 10 geführt und an anderer Stelle dem Produkttank 10 wieder zugeführt zu werden.

Indem der über das Abzweigrohr 15 abgezweigte Teilstrom senkrecht zur Auslaufströmung fließt, entsteht eine Querströmung, welche die Trombe bereits bei der Entstehung "mitreißt" und verhindert, dass diese sich ausbilden und stabilisieren kann. Zur Erzeugung des Teilstroms kann ein Unterdruck im Abzweigrohr 15 generiert werden, beispielsweise mittels einer in den Figuren nicht dargestellten Pumpe.

Ein Produkttank 10 der vorstehend beschriebenen Ausführungsbeispiele findet besonders bevorzugt in einer Vorrichtung zum Befüllen von Behältern, insbesondere in einer Getränkeabfüllanlage, Anwendung.

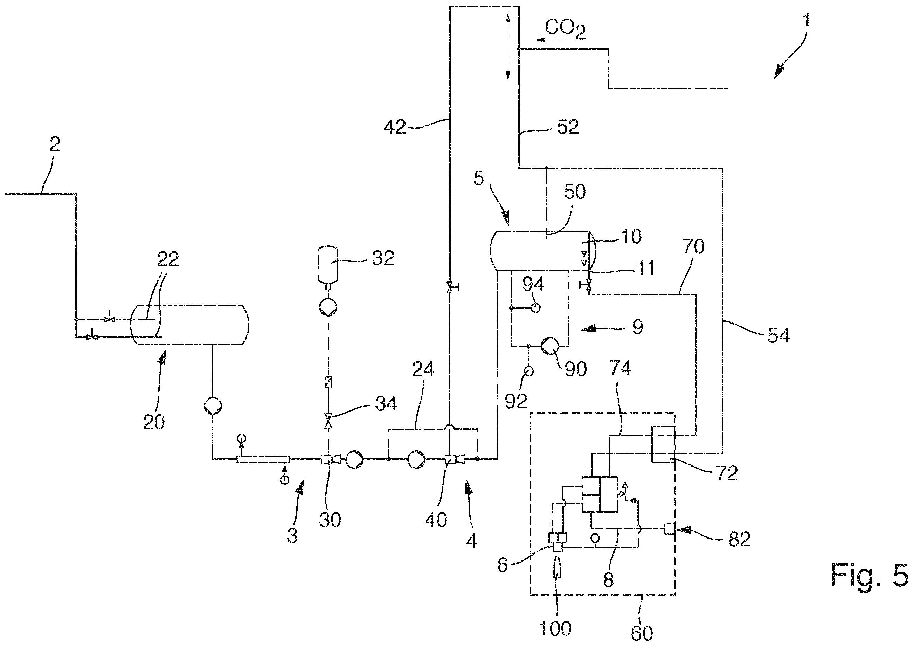

Die Figur 5 zeigt eine Vorrichtung 1 zum Befüllen eines schematisch angedeuteten Behälters 100 mit einem Füllprodukt gemäß einem Ausführungsbeispiel, wobei die Vorrichtung 1 hier in Form einer Getränkeabfüllanlage gezeigt ist. Die Vorrichtung 1 dient dabei beispielsweise zum Befüllen eines Stroms von zugeführten zu befüllenden Behältern 100 mit einem karbonisierten Erfrischungsgetränk.

Die Figur 5 wird nun anhand des Flusses des Füllprodukts in den zu befüllenden Behälter 100 beschrieben:
Zunächst wird Produktwasser, das bereits vorgereinigt und aufbereitet sein kann, ausgehend von einer Produktwasserzufuhr 2 einer Entgasungsvorrichtung 20 zugeführt. Die Entgasungsvorrichtung 20 ist hier schematisch in Form eines Entgasungstanks angedeutet, in dem das von der Produktwasserzufuhr 2 bezogene Produktwasser über schematisch angedeutete Sprühdüsen 22 versprüht wird.

Die Entgasungsvorrichtung 20 kann in Form einer Druckentgasung vorgesehen sein, bei der die Sauerstoff- und Stickstoffanteile im Produktwasser durch die Zugabe von CO₂ ausgetragen werden.

Die Entgasungsvorrichtung 20 kann aber auch in Form einer Vakuumentgasung vorgesehen sein, bei der im Entgasungstank ein Unterdruck bereitgestellt wird, wodurch die Sauerstoff- und Stickstoffanteile im Produktwasser ausgetragen werden.

Das Versprühen des Produktwassers über die Sprühdüsen 22 im Entgasungstank der Entgasungsvorrichtung 20 dient dabei der Vergrößerung der Oberfläche des Wassers, so dass der Entgasungsprozess effizient durchgeführt werden kann.

Anschließend an die Entgasungsvorrichtung 20 wird das auf diese Weise vorbereitete Produktwasser einem Mischer 3 zugeführt, der das Füllprodukt aus wenigstens zwei Komponenten anmischen kann.

Die erste Komponente ist dabei der bereits beschriebene Produktwasserstrom. Als zweite Komponente können beispielsweise der Grundstoff des Erfrischungsgetränks und/oder ein Sirup vorgesehen sein.

Der Mischer 3 verfügt entsprechend über ein Dosierventil 34, das eine Komponente aus einem Sirupreservoir 32 über eine Dosierstelle 30 in die Produktwasserzufuhr einspeist. Entsprechend wird in der Dosierstelle 30 der zugeführte Sirup mit dem zugeführten, vorbereiteten Produktwasser gemischt und auf diese Weise das Füllprodukt angemischt.

Das Sirupreservoir 32 dient insbesondere auch als Blasenabscheider, so dass der aus dem Sirupreservoir 32 bezogene Sirup im Wesentlichen blasenfrei ist und entsprechend eine zuverlässige Dosierung erzielt wird.

In dem gezeigten Ausführungsbeispiel ist lediglich eine einzige Dosierstelle 30 vorgesehen, so dass das vorbereitete Produktwasser an dieser Dosierstelle 30 mit einer Komponente, die hier in dem Sirupreservoir 32 vorgehalten ist, gemischt wird. Je nach Ausbildung des Mischers 3 können aber auch zwei, drei oder eine beliebige Anzahl solcher Dosierstellen 30 installiert sein, um entsprechend durch das Zuführen unterschiedlicher Komponenten zu dem jeweiligen Produktwasserstrom (auch mit bereits eingemischten Komponenten) schlussendlich das gewünschte Füllprodukt durch die Mischung der jeweiligen Komponenten anzumischen.

Anschließend an den Mischer 3 ist in dem gezeigten Ausführungsbeispiel eine Karbonisierungsvorrichtung 4 vorgesehen, die das ausgemischte Füllprodukt karbonisiert. Dazu ist eine Karbonisierungsstelle 40 vorgesehen, welche beispielsweise als Karbonisierungsdüse ausgebildet sein kann, über die von einer CO₂-Zufuhr 42 zugeführtes CO₂ in das ausgemischte Füllprodukt eingebracht wird. Die Dosierung des CO₂, das über die Karbonisierungsstelle 40 dem Füllprodukt zugeführt wird, hängt von den gewünschten Eigenschaften des Füllprodukts ab.

Um die Karbonisierungsstelle 40 herum ist ein Bypass 24 vorgesehen, der eingerichtet ist, um immer gleiche Bedingungen bezüglich des Durchflusses und/oder Drucks für die CO₂-Zudosage bereitzustellen - unabhängig von der Mixerleistung oder dem Mixeroutput.

Das auf diese Weise fertig hergestellte Füllprodukt, das nach der Karbonisierungsvorrichtung 4 auch in der vorgesehenen Karbonisierung vorliegt, wird in einem Produkttank 10, der in der Anwendung des hierin dargestellten Mischers 3 auch als "Puffertank" bezeichnet ist, zwischengepuffert.

Der Puffertank 10 nimmt entsprechend das ausgemischte und karbonisierte Füllprodukt auf und bildet ein Füllproduktreservoir für den nachfolgend beschriebenen Füller. In dem Puffertank 10 kann die Karbonisierung des ausgemischten und karbonisierten Füllprodukts darüber aufrechterhalten werden, dass der Puffertank 10 mit CO₂ bei einem solchen Druck vorgespannt wird, dass ein Entbinden des im Füllprodukt gebundenen CO₂ vermieden wird.

Die Vorspannung des Puffertanks 10 wird durch eine Vorspannvorrichtung 50 erreicht, über die CO₂ aus einer CO₂-Zufuhr 52 in den Kopfraum des Puffertanks 10 eingebracht wird. Damit liegt im Puffertank entsprechend eine CO₂-Atmosphäre unter einem Druck vor, die ein Entbinden des CO₂ aus dem ausgemischten und karbonisierten Füllprodukt, welches im Puffertank 10 zwischengespeichert ist, unterbindet.

Der Puffertank 10 steht mit einem Füllventil 6 eines schematisch angedeuteten Füllers zum Befüllen der zu befüllenden Behälter 100 in Verbindung. Der Füller kann einen Kessel, eine Ringleitung oder dergleichen, implementiert beispielsweise durch einen Produkttank gemäß den oben beschriebenen Ausführungsbeispielen, zur Versorgung der Füllventile 6 aufweisen, oder die Verbindung kann, wie in der Figur 5 gezeigt, pufferfrei vorliegen. Damit ist eine Fluidverbindung zwischen dem Puffertank 10 und dem Füllventil 6 so ausgebildet, dass ein Zwischenpuffern von Füllprodukt hier nicht vorgesehen ist.

Der Gasraum des Puffertanks 10 steht in dem gezeigten Ausführungsbeispiel auch mit dem Füllventil 6 über eine Spanngasleitung 54 in Verbindung, um dem Füllventil 6 Spanngas zur Verfügung zu stellen. Der Puffertank 10 ist durch diese Spanngasleitung 54 während des Füllvorgangs mit dem Kopfraum des zu befüllenden Behälters 100 verbunden. Über diese Verbindung wird der Behälter 100 vorgespannt und beim Befüllen das Rückgas in den Puffertank 6 zurückgeführt.

Herkömmliche Leitungsverbindungen werden in diesem Zusammenhang nicht als Puffer verstanden. Als Puffer wird vielmehr nur ein dediziert als Puffer ausgebildetes Reservoir verstanden, das ein entsprechendes Volumen aufweist, das nicht allein dem Transport des Füllprodukts dient, sondern welches Zwischenspeicherungen ermöglicht. Auch verfahrenstechnische Komponenten wie beispielsweise Absperrklappen, Sensoren, Durchflussmesser, Ventile, Rohrschellen, Abzweigungen etc. werden in diesem Zusammenhang nicht als Puffer verstanden, da sie zwar Führen des Füllprodukts dienen, aber kein Puffervolumen bereit stellen und damit auch keinerlei puffernde Wirkung haben.

Das Füllventil 6 ist an einem schematisch angedeuteten Füllerkarussell 60 des Füllers vorgesehen. Üblicherweise sind an dessen Umfang mehrere Füllventile 6 installiert. Ein Füllerkarussell 60 ist in Getränkeabfüllanlagen üblicherweise vorgesehen, um einen steten Strom an zu befüllenden Behältern aufzunehmen, diese während des Umlaufs über die jeweiligen Füllventile 6 mit dem Füllprodukt zu befüllen, und die dann befüllten Behälter 100 wieder an eine nachfolgende Transport- oder Verarbeitungsvorrichtung auszugeben.

Um das Füllprodukt von einem stehenden Anlagenteil der Vorrichtung 1, in dem unter anderem der Puffertank 10 und die Füllproduktleitung 70 vorgesehen sind, auf das sich relativ dazu drehende Füllerkarussell 60 zu übergeben, ist ein Drehverteiler 72 vorgesehen. Der Drehverteiler 72 übergibt entsprechend das über die Füllproduktleitung 70 zugeführte Füllprodukt auf eine weitere Füllproduktleitung 74 am Füllerkarussell 60, über die das Füllprodukt dann an das Füllventil 6 oder an die Füllventile 6 geleitet wird.

In der konkreten Ausgestaltung der Figur 5 ist eine Füllproduktleitung 70 zwischen dem Puffertank 10 und dem Drehverteiler 72 vorgesehen. Mittels des Drehverteilers 72 wird das Füllprodukt von dem sich im stationären Teil der Vorrichtung 1 befindlichen Teil der Füllproduktleitung 70 auf das sich relativ dazu drehende Füllerkarussell 60 übergeben. Auf dem Füllerkarussell 60 wird das Füllprodukt dann von dem sich auf dem Füllerkarussell 70 befindlichen Teil der Füllproduktleitung 70 zum Füllventil 6 transportiert.

Bei dem Füllventil 6 handelt es sich besonders bevorzugt um ein Proportionalventil. Durch die Ausbildung des Füllventils 6 als Proportionalventil ist es möglich, den Füllproduktstrom, der von dem Füllventil 6 dem zu befüllenden Behälter 100 zugeführt wird, in mehreren Stufen beziehungsweise besonders bevorzugt stufenlos zu regulieren.

Das Füllventil 6 kann dabei beispielsweise in Form eines Kegelventils ausgebildet sein, wobei ein Ventilsitz vorgesehen ist, in den ein Ventilkegel abgesenkt werden kann, um das Ventil zu verschließen. Durch ein stufenweises beziehungsweise stufenloses Anheben des Ventilkegels aus dem Ventilsitz kann der sich zwischen Ventilkegel und Ventilsitz ergebende Ringspalt in seinem Querschnitt variiert werden, so dass sich daraus ebenfalls eine Variation des das Proportionalventil durchfließenden Füllproduktstroms ergibt.

Die in Figur 5 gezeigte Ausbildung ermöglicht es entsprechend, das in dem Puffertank 10 aufgenommene, ausgemischte und karbonisierte Füllprodukt an das Füllventil 6 zu übergeben und dann kontrolliert in den zu befüllenden Behälter 100 einzufüllen. Da der Transport des Füllprodukts vom Puffertank 10 an das Füllventil 6 bevorzugt pufferfrei erfolgt, ist ein Puffertankt 10 in der Ausführung eines Produkttanks mit Strömungsleiteinrichtung 12 besonders nützlich, da etwaiges in das Füllprodukt eingebrachtes Gas unmittelbar an das Füllventil 6 gelangen würde.

In einer besonders vorteilhaften Ausführungsform, die auch in Figur 5 gezeigt ist, ist der Puffertank 10 oberhalb des Füllventils 6 angeordnet, und die sich zwischen dem Füllventil 6 und dem Puffertank 10 befindliche Füllproduktführung ist so angeordnet, dass sie stetig aufsteigend ist.

Entsprechend ergibt sich kein Siphoneffekt. Damit kann Gas, das im Füllventil 6 vorliegt, kontinuierlich zum Puffertank 10 hin aufsteigen und in diesen hinein entlüften, ohne dass es sich an einer bestimmten Position in der Füllproduktführung ansammelt.

Mit andern Worten kann das im Füllventil 6 und/oder der Füllproduktleitung 70 vorliegende Gas in der steigenden Füllproduktleitung 70 aufsteigen, so dass das Füllprodukt entsprechend ohne das Vorliegen von Gasblasen am Füllventil 70 ansteht.

Aus der Figur 5 ergibt sich, dass auch zwischen dem Mischer 3 und dem Puffertank 10 vorzugsweise kein Puffer angeordnet ist. Entsprechend ist der Mischer 3 pufferfrei mit dem Puffertank 10 verbunden.

Damit ergibt sich entsprechend ein sehr effizienter Aufbau der Vorrichtung 1, da zwischen dem Mischer 3 und dem Füllventil 6 nur ein einziger Puffertank, nämlich der Puffertank 10, angeordnet ist.

Dadurch, dass vorzugsweise lediglich ein einziger Puffertank 10 vorgesehen ist, kann die Steuerung beziehungsweise Regelung der jeweiligen Füllhöhe des Füllprodukts im Puffertank 10 einfach durchgeführt werden und die aus dem Stand der Technik bekannten komplexen Abhängigkeiten zwischen unterschiedlichen Puffertanks treten bei dem gezeigten Ausführungsbeispiel nicht auf, so dass auch die Verfahrenssteuerung beziehungsweise Verfahrensregelung vereinfacht wird.

Um eine Entlüftung des mit dem karbonisierten Füllprodukt befüllten Behälters am Füllventil 6 vor dem Entfernen des Behälters 100 von dem Füllventil 6 zu ermöglichen, ist bevorzugt eine Entlastungsleitung 8 vorgesehen, die über einen Drehverteiler 82 nach außen hin abgeführt wird.

Über diese Entlastungsleitung 8 und den Drehverteiler 82 kann entsprechend auch eine CIP-Reinigung der füllproduktführenden Bereiche der Vorrichtung 1 durchgeführt werden.

Dadurch, dass vorzugsweise lediglich ein einziger Puffertank 10 vorgesehen ist, kann damit auch der Reinigungsvorgang vereinfacht werden und die involvierten Oberflächen, welche möglicherweise auch zu einem Abkühlen des Reinigungsmediums und zu einem erhöhten Reinigungsaufwand führen können, können reduziert werden.

Um die Qualität des Füllprodukts im Puffertank 10 zu überwachen und regeln zu können, wird weiterhin eine Kreislaufleitung 9 bereitgestellt, in der mittels einer Umwälzpumpe 90 Füllprodukt aus dem Puffertank 10 entnommen werden kann und wieder in diesen zurückgegeben werden kann. In der Kreislaufleitung 9 ist hier beispielhaft ein CO₂-Sensor 92 zur Überwachung des CO₂-Gehalts des Füllprodukts und ein Brix-Sensor 94 zum Auslesen der Brix Werte vorgesehen. Andere Sensoren können ebenfalls oder alternativ in der Kreislaufleitung 9 vorgesehen werden.

Entsprechend ergibt sich hieraus ein besonders effizienter Aufbau der Vorrichtung, der sowohl in einem reduzierten Materialaufwand beim Aufbau der Vorrichtung und damit mit einem reduzierten Investitionsvolumen einhergeht, als auch in einer effizienteren Abfüllung resultiert, da das insgesamt vorzuhaltende Füllproduktvolumen reduziert werden kann und entsprechend ein Verwerfen von Füllproduktvolumina am Produktionsende oder bei einem Produktwechsel reduziert oder vermieden werden kann.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung zum Befüllen eines Behälters
- 100: Behälter
- 2: Produktwasserzufuhr
- 20: Entgasungsvorrichtung
- 22: Sprühdüse
- 3: Mischer
- 30: Dosierstelle
- 32: Komponentenreservoir
- 34: Dosierventil
- 4: Karbonisierungsvorrichtung
- 40: Karbonisierungsstelle
- 42: CO₂-Zufuhr
- 5: Puffertank
- 50: Vorspannvorrichtung
- 52: CO₂-Zufuhr
- 54: Spanngasleitung
- 6: Füllventil
- 60: Füllerkarussell
- 70: Füllproduktleitung
- 72: Drehverteiler
- 74: Füllproduktleitung
- 8: Entlastungsleitung
- 82: Drehverteiler
- 9: Kreislaufleitung
- 90: Umwälzpumpe
- 92: CO₂ Sensor
- 94: Brix Sensor
- 10: Produkttank
- 10a: Tankinnenwand
- 11: Auslauf
- 11a: Auslaufteller
- 11b: Auslaufanschluss
- 12: Strömungsleiteinrichtung
- 12a: Leitblech
- 12b: Leitblech
- 12c: Leitblech
- 13: Befestigungsrahmen
- 13a: Arme
- 14: Paddel
- 14a: Paddelbefestigung
- 15: Abzweigrohr
- 15a: Umlenkung
- 15b: Externer Rohrabschnitt

## Patentansprüche

1. Produkttank (10) zur Aufnahme eines flüssigen Produkts, vorzugsweise in einer Getränkeabfüllanlage, wobei der Produkttank (10) aufweist:
einen Auslauf (11) zum Ausleiten des Produkts aus dem Produkttank (10) entlang einer Ausleitrichtung; und
eine Strömungsleiteinrichtung (12), die im Innern des Produkttanks (10) angeordnet und dazu eingerichtet ist, eine zur Ausleitrichtung orientierte Querströmung zu erzeugen.

2. Produkttank (10) nach Anspruch 1, **dadurch gekennzeichnet, dass** die Strömungsleiteinrichtung (12) mindestens ein Leitblech (12a, 12b, 12c) umfasst, das einen Teil des Produkttankquerschnitts abdeckt.

3. Produkttank (10) nach Anspruch 2, **dadurch gekennzeichnet, dass** das zumindest eine Leitblech (12a, 12b, 12c) fest und/oder bündig an einer Innenwand (10a) des Produkttanks (10) befestigt ist.

4. Produkttank (10) nach Anspruch 3, **dadurch gekennzeichnet, dass** das zumindest eine Leitblech (12a, 12b, 12c) mit der Innenwand (10a) des Produkttanks (10) verschweißt ist.

5. Produkttank (10) nach einem der Ansprüche 2 bis **4, dadurch gekennzeichnet, dass** der Produkttank (10) einen zylindrischen Innenraum aufweist, der eine Axialrichtung definiert, das Leitblech (12a) im unteren Bereich des Produkttanks (10) angeordnet und in der Axialrichtung des Produkttanks (10) vom Auslauf (11) beabstandet ist, wobei das Leitblech (12a) vorzugsweise etwa ein Viertel des Produkttankquerschnitts abdeckt.

6. Produkttank (10) nach einem der Ansprüche 2 bis **4, dadurch gekennzeichnet, dass** der Produkttank (10) einen zylindrischen Innenraum aufweist, der eine Axialrichtung definiert, und das zumindest eine Leitblech (12b, 12c) bogenförmig geformt und so montiert ist, dass es zumindest abschnittsweise an der Innenwand (10a) des Produkttanks (10) verläuft und senkrecht zur Axialrichtung in den Innenraum des Produkttanks (10) vorsteht.

7. Produkttank (10) nach Anspruch 6, **dadurch gekennzeichnet, dass** das bogenförmige Leitblech (12b, 12c) in Axialrichtung des Produkttanks (10) an der Position des Auslaufs (11) angeordnet ist, wobei vorzugsweise zwei bogenförmige Leitbleche (12b, 12c) vorgesehen sind, die so geformt und montiert sind, dass sie an der gleichen Position in Axialrichtung an der Innenwand (10a) des Produkttanks (10) verlaufen und senkrecht zur Axialrichtung in den Innenraum des Produkttanks (10) vorstehen, wobei sie so in Axialrichtung an der Position des Auslaufs (11) angeordnet sind, dass sie den Auslauf (11) aussparen.

8. Produkttank (10) nach einem der vorigen Ansprüche, **dadurch gekennzeichnet, dass** ein Auslaufdeckel (11a) vorgesehen ist, der im Produkttank (10) in Ausleitrichtung in einem Abstand vom Auslauf (11) angeordnet ist und diesen abdeckt.

9. Produkttank (10) nach Anspruch 8, **dadurch gekennzeichnet, dass** die Strömungsleiteinrichtung (12) mehrere, vorzugsweise vier, Paddel (14) umfasst, die am Auslassteller (11a) installiert sind, wobei die Paddel (14) radial über den Auslaufteller (11a) hinausstehen.

10. Produkttank (10) nach einem der vorigen Ansprüche, **dadurch gekennzeichnet, dass** die Strömungsleiteinrichtung (12) ein Abzweigrohr (15) umfasst, das eine Öffnung im Bereich des Auslasses (11) aufweist und eingerichtet ist, um einen Teilstrom des über den Auslass (11) auszuleitenden Produkts abzuzweigen, wobei der abgezweigte Teilstrom vorzugsweise im Wesentlichen senkrecht auf der Ausleitrichtung steht.

11. Produkttank (10) nach Anspruch 10, **dadurch gekennzeichnet, dass** der Produkttank (10) einen zylindrischen Innenraum aufweist, der eine Axialrichtung definiert, und das Abzweigrohr (15) ausgehend von der Öffnung im Bereich des Auslasses (11) in der Axialrichtung verläuft, wobei das Abzweigrohr (15) vorzugsweise aus dem Produkttank (10) herausgeführt wird und eingerichtet ist, um den abgezweigten Teilstrom an anderer Stelle dem Produkttank (10) wieder zuzuführen.

12. Vorrichtung (1) zum Befüllen von Behältern (100) mit einem Füllprodukt, die einen Produkttank (10) nach einem der vorigen Ansprüche aufweist.

13. Vorrichtung (1) nach Anspruch 12, **dadurch gekennzeichnet, dass** diese einen Mischer (3) zum Anmischen des Füllprodukts aus wenigstens zwei Komponenten und ein oder mehrere Füllventile (6) zum Befüllen der Behälter (100) mit dem Füllprodukt aufweist, wobei der Produkttank (10) zur puffernden Aufnahme des im Mischer (3) angemischten Füllprodukts eingerichtet ist.

14. Vorrichtung (1) nach Anspruch 13, **dadurch gekennzeichnet, dass** das Füllventil (6) pufferfrei mit dem Puffertank (5) verbunden ist und/oder der Mischer (3) pufferfrei mit dem Puffertank (5) verbunden ist.
